# EUROPEAN PATENT APPLICATION

(11) **EP 4 480 610 A1**
(43) Date of publication of application: **25.12.2024**
(21) Application number: 23180973.2
(22) Date of filing: 22.06.2023
(51) Int. Cl.: B23B 27/10, B23B 27/16, B23B 51/06, B23C 5/28, B23D 77/00

(54) **A METAL CUTTING TOOL COMPRISING A COOLANT CHANNEL**

(71) Applicant: Seco Tools AB, 737 82 Fagersta (SE)
(72) Inventor: Thelin, Jimmy, SE-737 82 Fagersta (SE); Jonsson, Mats, SE-737 82 Fagersta (SE)
(74) Representative: Sandvik

(57) **Abstract**

The invention is related to a metal cutting tool (100) comprising a coolant channel (402). The coolant channel (402) comprises an inlet channel (408), an outlet channel (410), and a cavity (412), wherein the cavity (412) comprises a first end surface (414), and a second end surface (416), wherein the cavity (412) has a central axis C extending from the first end surface (414) to the second end surface (416), wherein the first end surface (414) comprises a cavity inlet (420), and wherein the second end surface (416) comprises a cavity outlet (422), wherein the second end surface (416) has an area A₃ as seen in a plane perpendicular to the central axis C. The axial distance between the cavity inlet (420) and the cavity outlet (422) is L. The cavity inlet (420) is defined by an inlet boundary B₁ and has an area A₁ as seen in a plane perpendicular to the central axis C, and the cavity outlet (422) is defined by an outlet boundary B₂ and has an area A₂ as seen in a plane perpendicular to the central axis C, wherein the longest distance between two points at a projection of the boundary B₂ onto a plane perpendicular to the central axis C is d₂, wherein A₃ > A₂, and wherein L > d₂, wherein A₂ > A₁ and wherein a projection of the inlet boundary B₁ onto the second end surface (416) lies completely within the outlet boundary B₂ as seen in a plane perpendicular to the central axis C.

## Description

### TECHNICAL FIELD

The present invention relates to a metal cutting tool comprising a coolant channel.

### BACKGROUND

In some metal cutting applications, very high temperatures are generated which results in a high heat load on the cutting tool which leads to a decreased lifetime of the cutting tool.

In order to improve the chip breaking performance of the cutting tool and thereby reduce the heat load on the cutting tool, coolant could be delivered as close to the cutting edge as possible. A reduced heat load will increase the lifetime of the cutting tool. A number of cooling systems are available on the market today where coolant delivery is supplied through the cutting tool at high pressure, e.g. EP 3903973 B1.

However, in some applications, a problem with the existing systems is that they are unsatisfactory in their ability to reduce the heat load of the cutting edge and thereby increase the lifetime of the cutting tool.

### SUMMARY OF THE INVENTION

It is an object of the present invention to overcome, or at least partly overcome, said problem by introducing a metal cutting tool comprising a coolant channel.

The object of the present invention is achieved by a metal cutting tool comprising a coolant channel extending from a coolant inlet to a coolant outlet, wherein the coolant channel comprises:
- an inlet channel;
- an outlet channel; and
- a cavity, wherein
the cavity comprises:
- a first end surface;
- a second end surface; and
- a peripheral side surface connecting the first end surface and the second end surface,
wherein
the cavity has a central axis C extending from the first end surface to the second end surface,
wherein
the first end surface comprises a cavity inlet, and wherein
the second end surface comprises a cavity outlet, wherein
the second end surface has an area A₃ as seen in a plane perpendicular to the central axis C, wherein
the axial distance between the cavity inlet and the cavity outlet is L, wherein
the inlet channel extends from the coolant inlet to the cavity inlet, and wherein
the outlet channel extends from the cavity outlet to the coolant outlet, wherein
the cavity inlet is defined by an inlet boundary B₁ and has an area A₁ as seen in a plane perpendicular to the central axis C, and wherein
the cavity outlet is defined by an outlet boundary B₂ and has an area A₂ as seen in a plane perpendicular to the central axis C, wherein
the longest distance between two points at a projection of the boundary B₂ onto a plane perpendicular to the central axis C is d₂, wherein
A₃ > A₂, and wherein L > d₂, wherein
A₂ > A₁ and wherein a projection of the inlet boundary B₁ onto the second end surface lies completely within the outlet boundary B₂ as seen in a plane perpendicular to the central axis C.

When the coolant enters the cavity with a high pressure, preferably above 8 bar, via the cavity inlet, a disturbance wave is generated since the coolant jet introduces an unstable shear layer in the boundary of the jet and causes vortex rings to form around the jet. The vortex rings propagate through the cavity until they reach the second end surface where they are reflected back upstream the cavity where they interact with the unstable shear layer. This induces vorticity fluctuations in the coolant flow. Due to this interaction, the vortex rings present in the unstable shear layer is amplified and will then again propagate through the cavity until they are reflected at the second end surface. These events are repeated and results in that a strong oscillation in the shear layer is developed. A fluctuating pressure field will be developed in the cavity resulting in that the velocity of the coolant jet exiting the cavity via the cavity outlet will vary periodically. Consequently, a pulsed coolant flow is generated.

In some cutting applications, a pulsed coolant flow will have superior chip breaking properties compared to a continuous coolant flow. An improved chip breaking performance reduces the heat load on the metal cutting tool and thereby increases the lifetime of the metal cutting tool.

The coolant channel is preferably an internal coolant channel extending through the metal cutting tool.

According to an embodiment, the inlet channel has a constant cross-sectional area.

According to an embodiment, the inlet channel has a varying cross-sectional area.

According to an embodiment, the cross-sectional area of the inlet channel decreases continuously towards the cavity inlet.

By reducing the cross-sectional area of the inlet channel towards the cavity inlet, the velocity of the coolant entering the cavity increases, which improves the generation of vortex rings, which in turn improves the generation of the pulsed flow.

According to an embodiment, the inlet channel comprises at least one further cavity.

According to an embodiment, the outlet channel has a constant cross-sectional area.

According to an embodiment, the outlet channel has a varying cross-sectional area.

According to an embodiment, the cross-sectional area of the outlet channel decreases continuously towards the coolant outlet.

According to an embodiment, the outlet channel comprises at least one further cavity.

According to an embodiment, the cavity inlet has a circular shape.

By having a circular cavity inlet, the generation of the pulsed flow is further improved due to the symmetric generation of the vortex rings.

According to an embodiment, the cavity outlet has a circular shape. In this embodiment, the distance d₂ is the diameter of the cavity outlet.

By having a circular cavity outlet, the generation of the pulsed flow is further improved due to the symmetric reflection of the vortex rings.

According to an embodiment, the cavity inlet has a center point P₁, and wherein the cavity outlet has a center point P₂, wherein the central axis C coincides with the center point P₁ and with the center point P₂.

By arranging the cavity inlet and the cavity outlet centrally within the cavity, the generation of the pulsed flow is further improved due to the symmetric reflection of the vortex rings.

According to an embodiment, 0.2 mm² ≤ A₁ ≤ 1.2 mm².

Due to the small size of the cavity inlet, the coolant will enter the cavity at a high speed which improves the generation of vortex rings, which in turn improves the generation of the pulsed flow.

According to an embodiment, 1.5A₁ ≤ A₂ ≤ 2.5A₁.

Due to this relation between the area of the cavity outlet and the area of the cavity inlet, the generation of the pulsed flow is further improved. If there is a smaller ratio between A₁ and A₂, the inlet flow rate will be so small that there is a risk that there is not enough energy to produce the disturbance wave. If the ratio is higher, then the difference in velocity of the coolant jet and the coolant momentarily trapped in the cavity will become so small that it might be difficult to generate any disturbance wave.

According to an embodiment, 1.5d₂ ≤ L ≤ 3.5d₂.

Due to this relation between L and d₂, the generation of the pulsed flow is further improved. A shorter axial distance L will result in that the disturbance wave cannot fully develop in the shear layer, which will impair the generation of a strong pulsed coolant flow. A longer axial distance increases the risk of introducing non-cyclic disturbances in the coolant flow, which will impair the generation of a strong pulsed coolant flow.

According to an embodiment, the cavity has a maximum cross-sectional area A₄ as seen in plane perpendicular to the central axis C, wherein 9A₁ ≤ A₄ ≤ 25A₁.

Due to this relation between the maximum cross-sectional area of the cavity and the area of the cavity inlet, the generation of the pulsed flow is further improved. If there is a smaller ratio between A₁ and A₄, it will be difficult to convert enough energy into kinetic energy of the disturbance wave, which will impair the generation of a strong pulsed coolant flow. If the ration is higher, then there will be so much coolant trapped in the cavity that the velocity of the disturbance wave will be reduced, which will impair the generation of a strong pulsed coolant flow.

According to an embodiment, the cavity has a maximum cross-sectional area A₄ as seen in plane perpendicular to the central axis C, wherein the maximum cross-sectional area A₄ is enclosed by a cavity boundary B₄, wherein the longest distance between two points at the cavity boundary B₄ is d₄, wherein d₄ > L.

Due to this relation between d₄ and L, the generation of the pulsed flow is further improved.

According to an embodiment, the cavity is axisymmetric around the central axis C.

By having an axisymmetric cavity, the generation of the pulsed flow is further improved due to the symmetric propagation of the vortex rings.

According to an embodiment the boundary B₄ has a circular shape. In this embodiment, the distance d₄ is the diameter of B₄.

According to an embodiment, the cavity has a constant cross-sectional area A₄ as seen in a plane perpendicular to the central axis C along the whole axial distance L.

By having a constant cross-sectional area of the cavity over the whole axial distance L, the generation of the pulsed flow is further improved due to the symmetric propagation of the vortex rings.

According to an embodiment, the cavity has a cylindrical shape.

By having a cylindrical shaped cavity, the generation of the pulsed flow is further improved due to the symmetric propagation of the vortex rings.

According to an embodiment, the central axis C defines a longitudinal direction of the cavity, and wherein the outlet boundary B₂ lies in a plane Q, which is perpendicular to the central axis C, and wherein the second end surface comprises a reflection surface, wherein the reflection surface extends from the outlet boundary B₂ to the peripheral side surface, wherein, as seen in a longitudinal cross-section of the cavity, the reflection surface is arranged at an angle α relative the plane Q, wherein α is an acute angle.

By arranging the reflection surface at an acute angle relative the plane Q, the generation of the pulsed flow is further improved due to an improved development of the disturbance wave.

According to an embodiment, 20° ≤ α ≤ 40°.

By having 20° ≤ α ≤ 40°, the generation of the pulsed flow is further improved.

According to an embodiment, the metal cutting tool comprises:
- a toolholder comprising a cutting interface; and
- a cutting element comprising a cutting edge; and
- a fastening element, wherein
the cutting element is secured in the cutting interface by the fastening element, and wherein the coolant outlet is directed towards the cutting element.

By directing the coolant outlet towards the cutting element, the coolant is directed towards the position where the chips are generated and the breaking of the chips is improved.

The cutting element is a metal cutting element for performing a metal cutting operation, such as turning, milling, drilling, boring or reaming.

According to an embodiment, the cutting element is a cubic boron nitride (CBN) cutting element, a polycrystalline diamond (PCD) cutting element, a cemented carbide cutting element, a cermet cutting element, or a ceramic cutting element.

According to an embodiment, the cutting element is any of a cutting insert, a drill, an end mill, a boring tool, or a reamer.

The cutting insert is preferably an indexable cutting insert.

The fastening element can be any type of conventional fastening element, such as a screw, a clamp or a locking pin.

According to an embodiment, the cutting element is a cutting insert comprising a rake surface and a clearance surface, wherein the cutting edge is arranged at an intersection between the rake surface and the clearance surface, wherein the coolant outlet is directed towards at least any of the rake surface, the clearance surface, or the cutting edge.

By directing the coolant outlet towards the rake surface, the clearance surface, or the cutting edge, the coolant is directed towards the position where the chips are generated and the breaking of the chips is improved.

According to an embodiment, the coolant channel extends through the toolholder.

According to an embodiment, the coolant channel extends through the fastening element, wherein the coolant outlet and the cavity are arranged in the fastening element.

By having the coolant channel extending through the fastening element, the coolant can be delivered closer to the cutting edge. The breaking of generated chips is thereby improved. By having the cavity arranged in the fastening element, the replacement of the cavity is facilitated since it is only necessary to replace the fastening element.

According to an embodiment, the fastening element is a clamping element configured to clamp the cutting element in the cutting interface.

According to an embodiment, the metal cutting tool is a turning tool.

By arranging the metal cutting tool as a turning tool, the generation of the pulsed coolant flow is further improved since the turning tool is stationary during operation, which will reduce the impact of external forces on the coolant flow through the cavity.

### BRIEF DESCRIPTION OF THE DRAWINGS

Figure 1 schematically illustrates a metal cutting tool according to an embodiment of the invention.
Figure 2 schematically illustrates a side view of the fastening element provided in the metal cutting tool illustrated in figure 1.
Figure 3 schematically illustrates a longitudinal cross-section of the cavity in the fastening element illustrated in figure 2.
Figure 4 schematically illustrates a cross-sectional view of the cavity in the fastening element illustrated in figure 2 as seen in the plane Q illustrated in figure 3.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

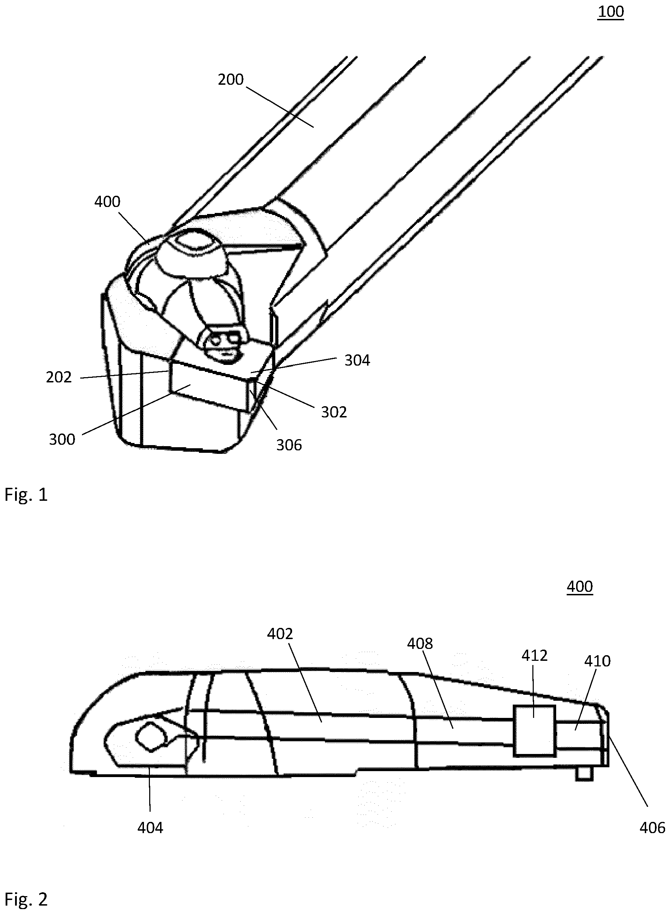

Figure 1 schematically illustrates a metal cutting tool (100) according to an embodiment of the invention in form of a turning tool. The turning tool (100) comprises a toolholder (200) comprising a cutting interface (202) in form of an insert pocket, a cutting element (300) in form of an indexable cutting insert, and a fastening element (400) in form of a clamping element securing the indexable cutting insert (300) in the insert pocket (202). The indexable cutting insert (300) comprises a rake surface (304), a clearance surface (306), and a cutting edge (302) arranged at an intersection between the rake surface (304) and the clearance surface (306).

Figure 2 schematically illustrates a side view of the clamping element (400) provided in the turning tool (100). The clamping element (400) comprises a coolant channel (402) extending from a coolant inlet (404) to a coolant outlet (406), wherein the coolant channel (402) comprises an inlet channel (408), an outlet channel (410), and a cavity (412). The coolant inlet (404) is configured to be in fluid communication with a coolant channel in the toolholder (200).

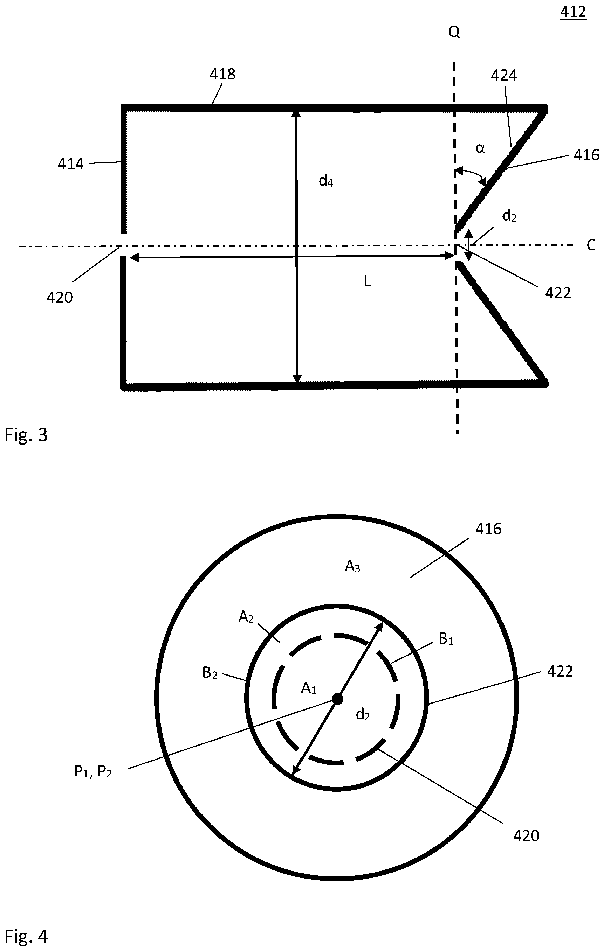

Figure 3 schematically illustrates a longitudinal cross-section of the cavity (412) in the clamping element (400). The cavity (412) comprises a first end surface (414), a second end surface (416), and a peripheral side surface (418) connecting the first end surface (414) and the second end surface (416). The cavity (412) has a central axis C extending from the first end surface (414) to the second end surface (416). The first end surface (414) comprises a cavity inlet (420), and the second end surface (416) comprises a cavity outlet (422). The axial distance between the cavity inlet (420) and the cavity outlet (422) is L. The cavity outlet (422) has a cylindrical shape with a diameter d₂. The peripheral side surface (418) has a cylindrical shape with a diameter d₄. The cavity outlet (422) is defined by an outlet boundary B₂, c.f. figure 4. The outlet boundary B₂ lies in a plane Q, which is perpendicular to the central axis C. The second end surface (416) comprises a reflection surface (424) extending from the outlet boundary B₂ to the peripheral side surface (418). The reflection surface (424) is arranged at an angle α relative the plane Q.

Figure 4 schematically illustrates a cross-sectional view of the cavity (412) as seen in the plane Q illustrated in figure 3. The cavity outlet (422) is arranged at the second end surface (416). Figure 4 further schematically illustrates a projection of the cavity inlet (420) onto the second end surface (416) as seen in the plane Q. The cavity inlet (420) is defined by an inlet boundary B₁ and has an area A₁ as seen in the plane Q. The cavity outlet (422) is defined by an outlet boundary B₂ and has an area A₂ as seen in the plane Q. Both the cavity inlet (420) and the cavity outlet (422) have circular shapes. The second end surface (416) has an area A₃ as seen in the plane Q. The cavity outlet (422) has a diameter d₂. The projection of the inlet boundary B₁ onto the second end surface (416) lies completely within the outlet boundary B₂. The cavity inlet (420) has a center point P₁, and the cavity outlet (422) has a center point P₂. The central axis C coincides with the center point P₁ and with the center point P₂.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby.

## Claims

1. A metal cutting tool (100) comprising a coolant channel (402) extending from a coolant inlet (404) to a coolant outlet (406), wherein the coolant channel (402) comprises:
- an inlet channel (408);
- an outlet channel (410); and
- a cavity (412), wherein
the cavity (412) comprises:
- a first end surface (414);
- a second end surface (416); and
- a peripheral side surface (418) connecting the first end surface (414) and the second end surface (416), wherein
the cavity (412) has a central axis C extending from the first end surface (414) to the second end surface (416), wherein
the first end surface (414) comprises a cavity inlet (420), and wherein
the second end surface (416) comprises a cavity outlet (422), wherein
the second end surface (416) has an area A₃ as seen in a plane perpendicular to the central axis C, wherein
the axial distance between the cavity inlet (420) and the cavity outlet (422) is L,
wherein
the inlet channel (408) extends from the coolant inlet (404) to the cavity inlet (420), and wherein
the outlet channel (410) extends from the cavity outlet (422) to the coolant outlet (406), wherein
the cavity inlet (420) is defined by an inlet boundary B₁ and has an area A₁ as seen in a plane perpendicular to the central axis C, and wherein
the cavity outlet (422) is defined by an outlet boundary B₂ and has an area A₂ as seen in a plane perpendicular to the central axis C, wherein
the longest distance between two points at a projection of the boundary B₂ onto a plane perpendicular to the central axis C is d₂, wherein
A₃ > A₂, and wherein L > d₂, **characterized in that**
A₂ > A₁ and **in that** a projection of the inlet boundary B₁ onto the second end surface (416) lies completely within the outlet boundary B₂ as seen in a plane perpendicular to the central axis C.

2. The metal cutting tool (100) according to claim 1, wherein the cavity inlet (420) has a center point P₁, and wherein the cavity outlet (422) has a center point P₂, wherein the central axis C coincides with the center point P₁ and with the center point P₂.

3. The metal cutting tool (100) according to any of the preceding claims, wherein 0.2 mm² ≤ A₁ ≤ 1.2 mm².

4. The metal cutting tool (100) according to any of the preceding claims, wherein 1.5A₁ ≤ A₂ ≤ 2.5A₁.

5. The metal cutting tool (100) according to any of the preceding claims, wherein 1.5d₂ ≤ L ≤ 3.5d₂.

6. The metal cutting tool (100) according to any of the preceding claims, wherein the cavity (412) has a maximum cross-sectional area A₄ as seen in plane perpendicular to the central axis C, wherein 9A₁ ≤ A₄ ≤ 25A₁.

7. The metal cutting tool (100) according to any of the preceding claims, wherein the cavity (412) has a maximum cross-sectional area A₄ as seen in plane perpendicular to the central axis C, wherein the maximum cross-sectional area A₄ is enclosed by a cavity boundary B₄, wherein the longest distance between two points at the cavity boundary B₄ is d₄, wherein d₄ > L.

8. The metal cutting tool (100) according to any of the preceding claims, wherein the cavity (412) has a constant cross-sectional area A₄ as seen in a plane perpendicular to the central axis C along the whole axial distance L.

9. The metal cutting tool (100) according to any of the preceding claims, wherein the central axis C defines a longitudinal direction of the cavity (412), and wherein the outlet boundary B₂ lies in a plane Q, which is perpendicular to the central axis C, and wherein the second end surface (416) comprises a reflection surface (424), wherein the reflection surface (424) extends from the outlet boundary B₂ to the peripheral side surface (418), wherein, as seen in a longitudinal cross-section of the cavity (412), the reflection surface (424) is arranged at an angle α relative the plane Q, wherein α is an acute angle.

10. The metal cutting tool (100) according to claim 9, wherein 20° ≤ α ≤ 40°.

11. The metal cutting tool (100) according to any of the preceding claims, wherein the metal cutting tool (100) comprises:
- a toolholder (200) comprising a cutting interface (202); and
- a cutting element (300) comprising a cutting edge (302); and
- a fastening element (400), wherein
the cutting element (300) is secured in the cutting interface (202) by the fastening element (400), and wherein
the coolant outlet (406) is directed towards the cutting element (300).

12. The metal cutting tool (100) according to claim 11, wherein the cutting element (300) is a cutting insert comprising a rake surface (304) and a clearance surface (306), wherein the cutting edge (302) is arranged at an intersection between the rake surface (304) and the clearance surface (306), wherein the coolant outlet (406) is directed towards at least any of the rake surface (304), the clearance surface (306), or the cutting edge (302).

13. The metal cutting tool (100) according to any of claim 11 or 12, wherein the coolant channel (402) extends through the fastening element (400), wherein the coolant outlet (406) and the cavity (412) are arranged in the fastening element (400).

14. The metal cutting tool (100) according to any of claims 11-13, wherein the fastening element (400) is a clamping element configured to clamp the cutting element (300) in the cutting interface (202).

15. The metal cutting tool (100) according to any of the preceding claims, wherein the metal cutting tool (100) is a turning tool.
